# FASCICULE DE BREVET EUROPEEN

(11) **EP 1 701 432 B1**
(45) Date de publication et mention de la délivrance du brevet: **16.12.2009**
(21) Numéro de dépôt: 06290349.7
(22) Date de dépôt: 01.03.2006
(51) Int. Cl.: H02K 11/04, H02K 7/14, H02K 5/22

(54) **Moteur électrique pour ventilateur de véhicule automobile, et procédé de montage associé**
Elektrischer Ventilatormotor für Fahrzeuge und Verfahren für seine Montage
Electric motor for a vehicle ventilator and process for assembling it

(30) Priorité: 07.03.2005 FR 0502268
(43) Date de publication de la demande: 13.09.2006
(73) Titulaire: Faurecia Cooling Systems, 92000 Nanterre (FR)
(72) Inventeur: Mosbach, Christophe, 90500 Beaucourt (FR); Devillers, Nathalie, 25700 Valentigney (FR)
(74) Mandataire: Domenego, Bertrand

(56) Documents cités:
- EP-A- 0 682 396
- WO-A-03/001650
- US-A- 5 278 468
- US-A1- 2004 027 014

## Description

La présente invention concerne un moteur électrique pour ventilateur de véhicule automobile, selon le préambule de la revendication 1.

On connaît de EP 0 682 396 et de WO 03/00 1650 des moteurs du type précité.

On connaît de EP-A-1 079 502 un moteur électrique du type précité, dans lequel le stator comprend une pluralité de bobines de génération d'un champ électromagnétique tournant.

Les bobines sont raccordées électriquement à une carte de commande fixée dans le boîtier du moteur. Les moyens de raccordement électrique entre la carte de commande et les bobines comprennent des pattes qui présentent une partie axiale raccordée à une bobine, et une partie radiale en forme de lyre, raccordée à la carte. La partie radiale est déformable élastiquement.

Un tel moteur ne donne pas entière satisfaction. En effet, les vibrations générées sur le stator suivant l'axe du rotor par les champs magnétiques résultant de la rotation du rotor sont transmises à la carte électronique par les parties axiales des pattes, ce qui détériore la carte. La fiabilité du moteur est donc réduite.

Un but de l'invention est donc de fournir un moteur électrique pour véhicule automobile dont la fiabilité est améliorée.

A cet effet, l'invention a pour objet un moteur électrique selon la revendication 1.

Le moteur selon l'invention peut comprendre l'une ou plusieurs des caractéristiques qui font l'objet des revendications 2 à 5.

L'invention a également pour objet un procédé de montage selon la revendication 6.

Le procédé de l'invention peut comprendre l'une ou plusieurs des caractéristiques qui font l'objet des revendications 7 à 9.

Des exemples de réalisation de l'invention vont maintenant être décrits, en regard des dessins annexés sur lesquels :
- la Figure 1 est une vue partielle de dessous en perspective d'un premier moteur selon l'invention ;
- la Figure 2 est une vue en coupe méridienne suivant le plan II-II de la Figure 1 ;
- la Figure 3 est une vue de dessus d'une partie du stator du moteur de la Figure 2 ;
- la Figure 4 est une vue partielle de dessous en perspective des moyens de raccordement électriques entre la carte électronique de commande et le stator d'un moteur selon l'invention ;
- la Figure 5 est une vue analogue à la Figure 4, lors du montage du moteur ;
- la Figure 6 est une vue analogue à la Figure 4 des moyens de raccordement électrique d'un deuxième moteur selon l'invention ; et
- la Figure 7 est une vue analogue à la Figure 5 du deuxième moteur selon l'invention.

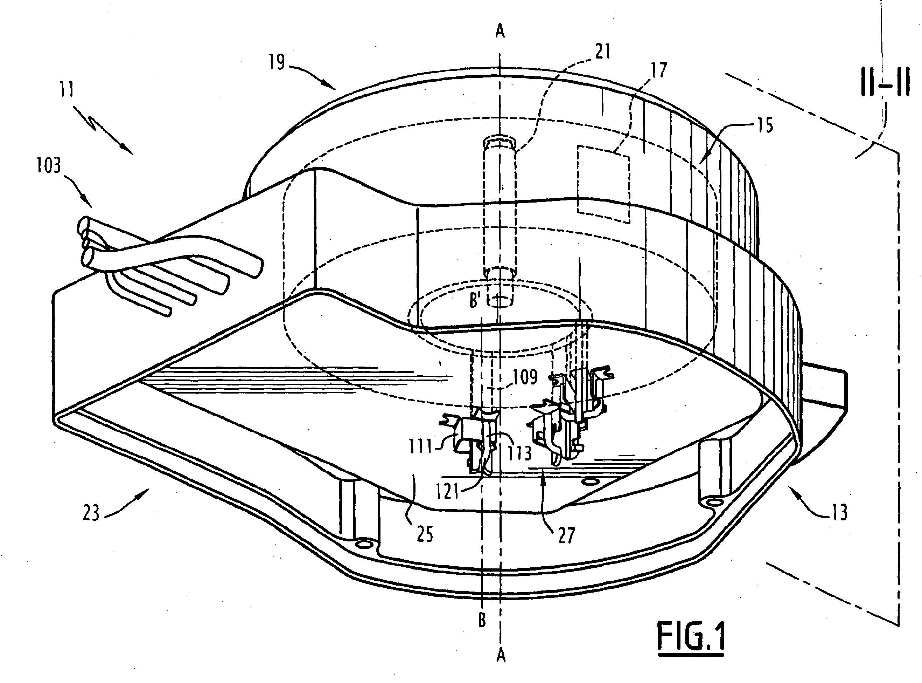

Le premier moteur électrique 11 selon l'invention, représenté sur les Figures 1 à 4, est un moteur électrique sans balais, destiné à être utilisé par exemple dans un groupe moto-ventilateur de bloc avant de véhicule automobile.

Comme illustré par la Figure 1, le moteur 11 comprend une platine de support 13, un stator 15 monté solidaire de la platine 13, le stator 15 comprenant une pluralité de bobines 17 de génération d'un champ électromagnétique tournant.

Le moteur 11 comprend en outre un rotor 19 muni d'un arbre 21 monté rotatif sur le support 13 autour d'un axe A-A' de rotor supposé vertical, un boîtier 23 de commande de la rotation du rotor 19 comprenant une carte électronique 25, et des moyens 27 de raccordement électrique entre chaque bobine 17 et la carte 25.

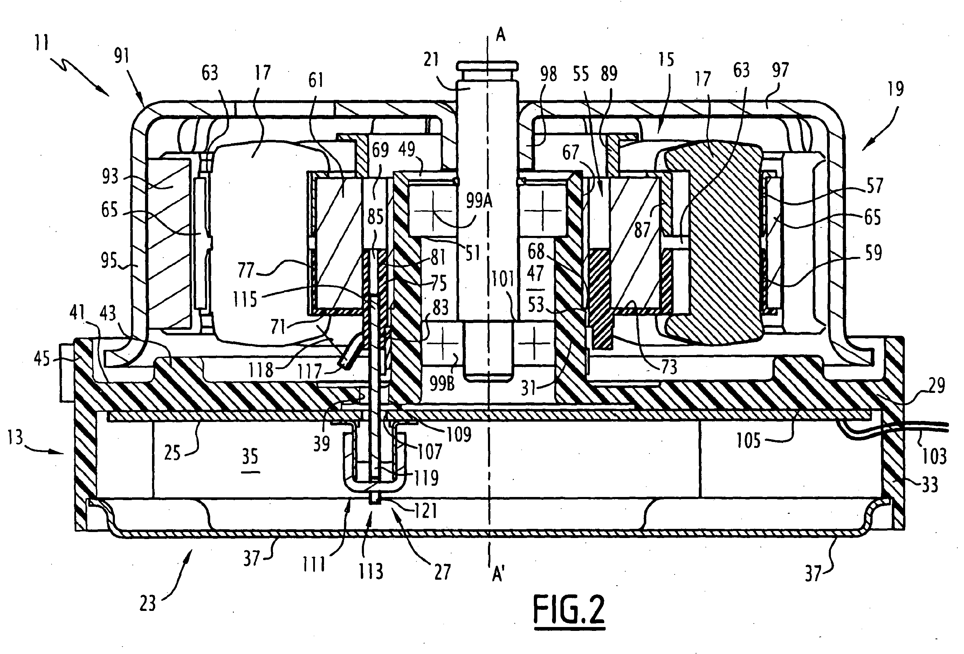

Comme illustré par la Figure 2, la platine 13 comprend une base 29, un manchon central 31 qui fait saillie vers le haut par rapport à la base 29, et une paroi périphérique inférieure 33 qui délimite un logement inférieur 35 obturé par un capot 37.

La base 29 s'étend sensiblement dans un plan horizontal. Elle est délimitée intérieurement par le manchon central 31. Elle présente trois ouvertures 39 de passage des moyens de raccordement 27, situées autour du manchon 31 et débouchant dans le logement 35.

La base 29 comprend, sur sa surface supérieure 41, une nervure annulaire intérieure 43 et un rebord périphérique annulaire extérieur 45 qui font saillie vers le haut.

Le manchon central 31 est formé par un cylindre creux. Il délimite une cavité centrale 47 débouchant vers le haut à travers une ouverture supérieure 49, et débouchant vers le bas dans le logement inférieur 35.

Le manchon central 31 délimite sur sa surface intérieure, au voisinage de l'ouverture supérieure 49, un épaulement annulaire 51 de support de roulement. Il délimite sur sa surface extérieure, sous l'épaulement 51, un épaulement annulaire extérieur 53 de réception du stator 15.

La paroi inférieure 33 fait saillie vers le bas à partir de la base 29. Elle s'étend dans le prolongement inférieur du rebord 45.

Le stator 15 comprend, outre les bobines 17, un support de bobines 55 monté sur le manchon central 31, et des flasques d'isolation supérieur et inférieur 57 et 59 appliqués respectivement sur les surfaces supérieure et inférieure du support de bobines 55.

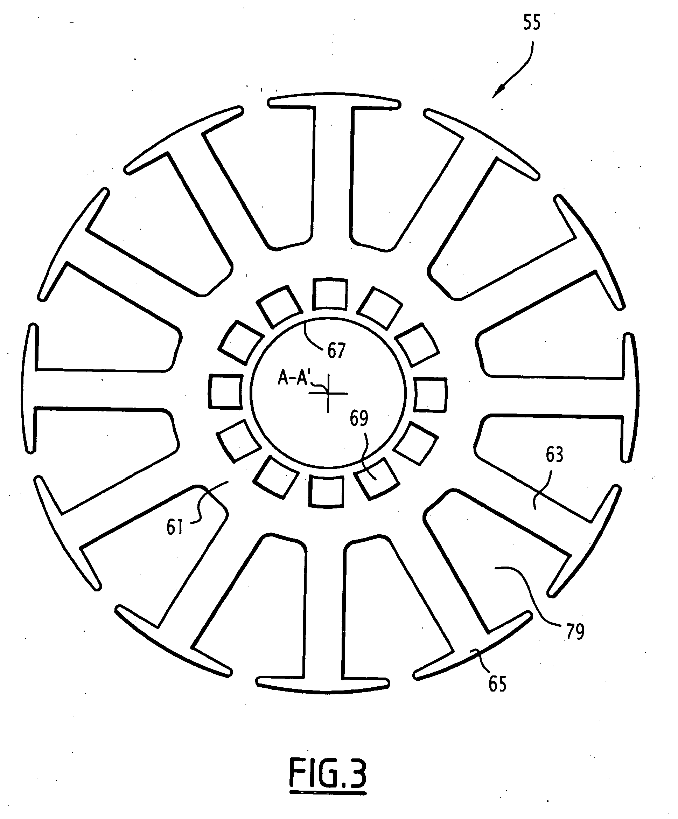

Comme illustré par la Figure 3, le support 55 comprend une couronne centrale 61, des bras radiaux 63 communément appelés dents qui font saillie radialement vers l'extérieur à partir de la couronne centrale 61, et pour chaque dent 63, une plaque terminale 65 s'étendant de manière périphérique à l'extrémité de la dent 63.

La couronne centrale 61 délimite intérieurement une cavité centrale 67 d'axe A-A' de forme complémentaire à la surface extérieure du manchon 31. Le manchon 31 est reçu dans la cavité centrale 67.

Comme illustré par la Figure 2, la surface inférieure 68 de la couronne 61 est calée contre l'épaulement annulaire extérieur 53 pour bloquer axialement en position le support de bobines 55 sur le manchon central 31.

La couronne 61 présente, en regard de chaque dent 63, une cavité 69 axiale traversante, de section transversale sensiblement rectangulaire.

Le flasque inférieur 59 est réalisé à base d'un matériau isolant électrique. Il présente une surface supérieure 71 sensiblement conjuguée à la surface inférieure 73 du support de bobines 55. Il comprend également des doigts 75 de réception des moyens de raccordement 21 et des parties saillantes 77 supérieures d'isolation électrique, disposées dans les encoches intermédiaires 79 ménagées entre les dents 63 adjacentes.

Les doigts 75 sont insérés dans les cavités 69 traversantes de la couronne centrale 61. Chaque doigt 75 comprend une partie supérieure 81 insérée dans une cavité traversante 69 et une partie inférieure 83 qui fait saillie vers le bas par rapport à la surface inférieure 71. Un passage de réception 85 traversant est ménagé dans chaque doigt 75.

Le flasque supérieur 57 est réalisé à base d'un matériau isolant électrique. Il présente une forme sensiblement conjuguée à la surface supérieure du support de bobines 55. Il comprend en outre des parties saillantes inférieures 87 reçues dans les encoches 79 entre les dents 63 en regard des parties saillantes 77, et un rebord annulaire intérieur 89 qui s'étend autour de l'axe A-A' au dessus de la couronne centrale 61.

Les bobines 17 sont enroulées autour des dents 63, chacune autour d'un axe radial. Les bobines 17 enserrent les parties saillantes 77 et 87 des flasques supérieur et inférieur 57 et 59.

Le rotor 19 comprend une culasse renversée 91 solidaire de l'arbre de rotation 21, et une pluralité d'aimants permanents 93 fixés dans cette culasse 91.

La culasse 91 comprend une jupe périphérique 95 verticale qui s'étend en regard des plaques terminales 65, et un fond supérieur 97 qui s'étend en regard de la couronne 61.

L'arbre de rotation 21 est monté à force dans un collet central 98 de la culasse 91. Il fait saillie vers le bas dans celle-ci à partir du fond supérieur 97. Des roulements supérieur et inférieur 99A et 99B sont interposés entre l'arbre de rotation 21 et le manchon central 31.

Le roulement supérieur 99A est calé sur l'épaulement supérieur 51 et le roulement inférieur 99B est reçu contre un épaulement inférieur 101 ménagé sur une surface extérieure de l'arbre 21. Le rotor 19 est ainsi monté rotatif autour de l'axe A-A' par rapport au stator 15.

Les aimants permanents 93 sont collés sur la surface intérieure de la jupe 95. Ils s'étendent sensiblement en regard des plaques terminales 65, avec interposition d'un jeu annulaire.

Comme illustré par la Figure 2, le boîtier de commande 23 est disposé dans le logement 35. Il comprend, outre la carte électronique 25, des fils 103 de raccordement électrique de la carte électronique 25 à une source de tension électrique continue.

La carte électronique 25 est vissée sur une surface inférieure 105 de la base 29. Elle délimite trois ouvertures 107 de passage traversantes ménagées sensiblement en regard des ouvertures de passage 39 de la base 29.

La carte électronique 25 intégrée au moteur a pour fonction de convertir le signal continu délivré par la source de tension en un signal alternatif triphasé.

Les moyens de raccordement électrique 27 comprennent trois pattes 109 de phase montées solidaires du stator 15. Ils comportent en outre, pour chaque patte 109, un cavalier 111 de réception, monté solidaire de la carte électronique 25, et un lien souple 113, formé par une tresse sensiblement librement déformable, qui relie le cavalier 111 à la patte 109. Une seule patte 109 est représentée sur la Figure 2.

Chaque patte 109 comprend une partie supérieure 115 de fixation au stator, au moins un crochet 117 de raccordement électrique aux bobines 17, et une partie inférieure 119 de raccordement à la carte électronique 25.

La partie supérieure de fixation 115 est insérée à force dans le passage traversant 85 d'un doigt 75.

Chaque crochet 117 fait saillie radialement vers l'extérieur et vers le bas à partir d'une partie médiane de la patte 109. Chaque crochet 117 s'étend dans l'espace défini entre la base 29 et le support 55, en regard des enroulements des bobines 17. Chaque crochet 117 est raccordé à au moins une bobine 17 par des fils de raccordement 118.

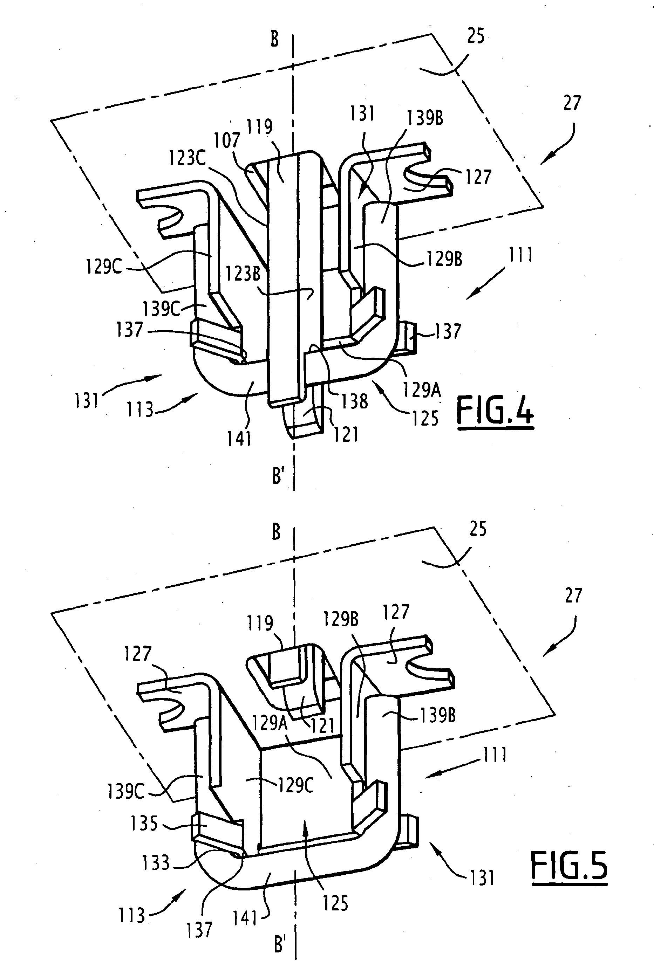

La partie inférieure 119 de la patte 109 fait saillie dans le logement inférieur 35 à travers les ouvertures de passage 39 et 107 ménagées respectivement dans la base 29 et dans la carte 25. Elle délimite une échancrure 121 centrale d'axe B-B' parallèle à l'axe A-A' qui débouche à son extrémité inférieure. Comme illustré par la Figure 4, l'échancrure 121 débouche latéralement dans les surfaces latérales 123B et 123C de la patte 109.

Chaque cavalier 111 comprend un profilé 125 axial et des languettes supérieures 127 transversales de fixation à la carte électronique 25, plaquées contre la carte 25.

Le cavalier 111 est réalisé en un matériau conducteur de l'électricité. Chaque cavalier 111 est raccordé électriquement à une des trois phases générées par la carte électronique 25.

Le profilé axial 125 présente une section transversale en forme de U formée par trois parois planes verticales 129. Les parois 129 du profilé entourent l'ouverture 107. Les deux parois verticales 129B et 129C opposées du profilé 125 s'étendent respectivement en regard des surfaces latérales 123B et 123C de la patte 109. La hauteur des parois latérales 123, prise suivant l'axe B-B' est inférieure à la hauteur de la partie inférieure 119 de la patte.

Chaque paroi 129B, 129C comprend, sur son bord inférieur, une fourche 131 formant guide de positionnement de la tresse 113, en saillie vers l'extérieur.

Le bord inférieur 137 des guides 131 s'étend sensiblement en regard du fond 138 de l'échancrure 121 lorsque le stator 15 est monté sur la platine 13.

Les languettes 127 sont venues de matière avec le profilé 125. Elles s'étendent transversalement à partir du bord supérieur des parois 129.

La tresse 113 est formée à partir de fils métalliques déformables conducteurs de l'électricité. La tresse 113 est sensiblement librement déformable, c'est-à-dire qu'elle est sensiblement sans mémoire de forme. Elle comprend deux régions d'extrémités 139B et 139C fixées respectivement sur les surfaces extérieures respectives des parois latérales 129B et 129C et engagées dans les guides 131. La tresse 113 comprend également une région intermédiaire 141 sensiblement librement déformable s'étendant sous le cavalier 111 entre les régions d'extrémité 139B et 139C. La tresse 113 chevauche ainsi le cavalier 111.

La région intermédiaire 141 de la tresse est engagée dans l'échancrure centrale 121 de la patte 109. La partie inférieure 119 de la patte 109 est sertie sur la région intermédiaire 141.

Le fonctionnement du moteur électrique 11 selon l'invention va maintenant être décrit. Lorsque la carte électronique 25 est alimentée électriquement par les fils 103, elle commande sélectivement l'alimentation des différentes pattes de raccordement 109 pour créer un champ électromagnétique tournant en regard des aimants 93 permanents du rotor. La puissance électrique d'alimentation est transmise aux bobines 17 via successivement le cavalier 111, la tresse 113, la patte 109, le crochet 117 et les fils 118.

Sous l'effet de ce champ électromagnétique tournant, les aimants 93 génèrent une force d'entraînement du rotor 19 en rotation autour de l'axe A-A'.

Par réaction aux variations des champs électromagnétiques, des efforts s'exercent sur le stator 15, sous forme de vibrations axiales et radiales. Ces vibrations sont transmises aux pattes 109 par l'intermédiaire du support de bobines 55.

Toutefois, la région intermédiaire 141 de la tresse étant sensiblement librement déformable, les vibrations sont absorbées par cette région intermédiaire 141 et ne sont pas transmises à la carte électronique 25. Par suite, la carte électronique 25 n'est pas soumise à des vibrations de forte intensité provenant du stator 15, ce qui améliore sa durée de vie et augmente la fiabilité du moteur 11.

Un procédé de montage du moteur électrique 11 représenté sur la Figure 2 va maintenant être décrit.

Dans un premier temps, la carte électronique 25 est vissée sur la surface inférieure 105 de la base 29, et les cavaliers 111 sont fixés sur la carte électronique 25. Puis, les régions d'extrémité 139B et 139C de la tresse sont disposées dans les guides 131 et sont soudées sur les parois verticales 129B et 129C respectives du cavalier 111.

Dans un deuxième temps, les flasques supérieur et inférieur 57 et 59 sont appliqués sur le support de bobine 55. Les bobines 17 sont alors enroulées autour des dents 63, et les pattes de raccordement 109 sont insérées à force dans les passages traversants 85. Les fils de connexion 118 sont raccordés entre les bobines 17 et les crochets 117.

Le support de bobine 55 est alors monté sur le manchon central 31. Lors de ce montage, les parties inférieures 119 des pattes 109 sont introduites dans les ouvertures de passage respectives 39 et 107 de la base 29 et de la carte électronique 25.

La partie inférieure 119 de chaque patte 109 pénètre alors dans un cavalier 111 associé. La tresse 113 s'insère facilement dans l'échancrure 121, puisque le positionnement précis de la région intermédiaire 141 par rapport à la patte 109 est assuré par les guides 131 qui reçoivent les régions d'extrémité 139 de la tresse 113. La partie inférieure 119 de la patte 109 est alors sertie sur la tresse 113.

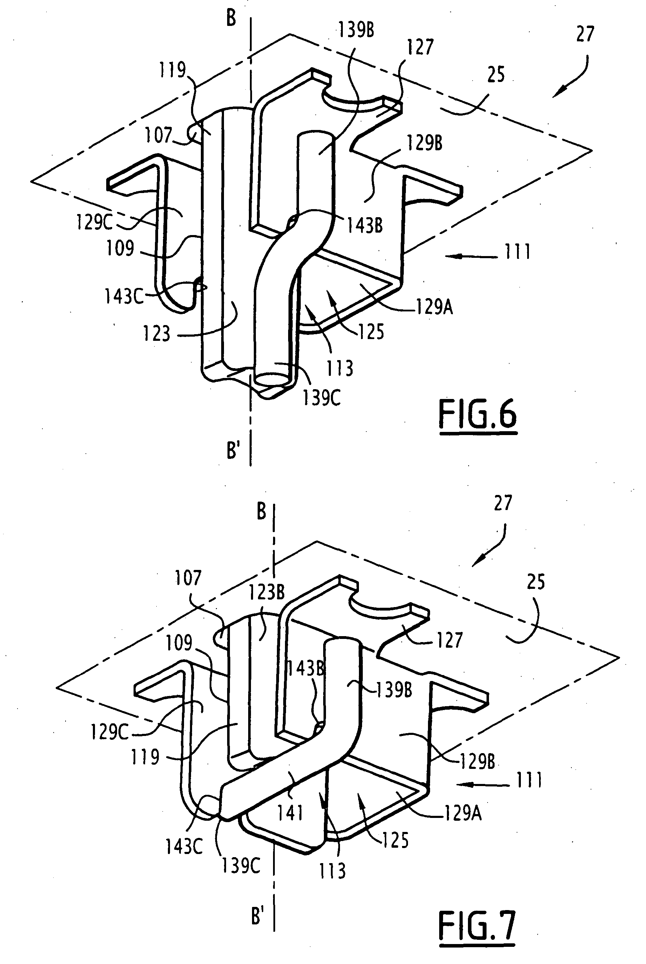

Dans le deuxième moteur selon l'invention, représenté sur la Figure 6, la patte 109 est dépourvue d'échancrure, et le cavalier 111 est dépourvu de guides 131.

La tresse 113 est positionnée dans le cavalier 111 à l'aide de fentes verticales de guidage 143 ménagées dans les parois latérales opposées 129B et 129C du cavalier. Les fentes 143 débouchent dans les bords inférieurs respectifs des parois 129B et 129C et s'étendent en regard l'une de l'autre.

Par ailleurs, seule une région d'extrémité 139B de la tresse 113 est fixée sur le cavalier 111. Cette région 139B est engagée dans une première fente 143B. La région d'extrémité libre 139C de la tresse est mobile par rapport au cavalier 111 entre une position de repos représentée sur la Figure 7 et une position active de fixation représentée sur la Figure 6.

Dans la position de repos représentée sur la Figure 7, la région d'extrémité libre 139C de la tresse 113 est engagée de manière libérable dans la fente 143C de positionnement en regard de la première fente 143B.

Dans la position de fixation représentée sur la Figure 6, la région d'extrémité libre 139C de la tresse fait saillie vers le bas par rapport au cavalier 111. Cette région d'extrémité libre 139C est soudée sur la patte de raccordement 109.

Lors du montage du stator 15 sur la platine, la partie inférieure 119 de la patte de raccordement 109 pousse la région d'extrémité libre 139B de la tresse vers le bas, à l'écart de la fente de positionnement 143C. La région d'extrémité libre 139B se plaque alors contre la surface latérale 123B de la patte 109 située en regard de la paroi 129B, ce qui facilite sa fixation par soudure contre la partie inférieure 119 de la patte 109.

Le fonctionnement du deuxième moteur selon l'invention est par ailleurs analogue au fonctionnement du premier moteur 11 selon l'invention.

## Revendications

1. Moteur électrique (11) pour ventilateur de véhicule automobile, du type comprenant :
- un stator (15) comportant au moins un organe (17) de génération d'un champ électromagnétique tournant ;
- un rotor (19) monté rotatif par rapport au stator (15) autour d'un axe (A-A') de rotor ; et
- un boîtier (23) de commande de la rotation du rotor (19), monté solidaire du stator (15), le boîtier (23) comprenant au moins une carte électronique (25) de commande de la rotation du rotor (19) et des moyens (27) de raccordement électrique entre la carte électronique (25) et le ou chaque organe de génération (17) ;
dans lequel les moyens de raccordement (27) sont sensiblement librement déformables
et dans lequel les moyens de raccordement (27) comprennent un lien (113) sensiblement librement déformable en matériau conducteur de l'électricité présentant une région (141 ; 139C) solidaire de la carte électronique (25) et une région (139B ; 139C) solidaire du stator (15),
**caractérisé en ce que** le lien est formé par une tresse sensiblement librement déformable.

2. Moteur électrique (11) selon la revendication 1, **caractérisé en ce que** les moyens de raccordement (27) comprennent des guides (131 ; 143) de positionnement du lien (113) solidaires de l'un de la carte (25) ou du stator (15), au moins une extrémité (139B) du lien (113) étant fixée sur un desdits guides de positionnement (131).

3. Moteur électrique (11) selon la revendication 2, **caractérisé en ce que** deux extrémités (139B ; 139C) du lien (113) sont fixées sur un desdits guides de positionnement (131), le lien (113) comprenant une région intermédiaire (141) sensiblement librement déformable s'étendant entre lesdites extrémités (139B ; 139C) et sur laquelle est fixée l'autre de la carte (25) ou du stator (15).

4. Moteur électrique (11) selon l'une quelconque des revendications 2 à 3, **caractérisé en ce que** les guides de positionnement sont compris dans un cavalier (111) monté en saillie sur la carte électronique (25), le stator (15) comprenant une patte (109) de raccordement électrique disposée en regard du cavalier (111).

5. Moteur électrique (11) selon la revendication 4, **caractérisé en ce que** le cavalier comprend un profilé axial (125) présentant une section transversale en forme de U et des languettes de fixation (127) à la carte (25) électronique plaquée contre la carte (25).

6. Procédé de montage d'un moteur (11) selon l'une quelconque des revendications 1 à 5, **caractérisé en ce qu'**il comprend les étapes suivantes :
(a) on positionne une première partie (119) de raccordement solidaire du stator (115) au voisinage d'une deuxième partie (111) de raccordement solidaire de la carte électronique (25) ; et
(b) on fixe un lien (113) sensiblement librement déformable en matériau conducteur de l'électricité formé par une tresse sensiblement librement déformable sur l'une et l'autre desdites parties de raccordement (111, 119).

7. Procédé de montage selon la revendication 6, **caractérisé en ce qu'**il comprend les étapes suivantes :
- avant l'étape (a), on fixe au moins une extrémité (139B) du lien (113) dans des guides de positionnement solidaires de l'un du stator (15) et de la carte électronique (25), et
- on amène la partie de raccordement (119) de l'autre du stator (15) et de la carte électronique (25) au contact du lien (113) lors de l'étape (a).

8. Procédé de montage selon la revendication 7, **caractérisé en ce qu'**avant l'étape (a), on fixe deux extrémités (139B, 139C) du lien (113) dans les guides de positionnement, et **en ce que** lors de l'étape (a), la région de raccordement (119) de l'autre du stator (15) et de la carte électronique (25) est amenée au contact d'une région intermédiaire (141) du lien (113) située entre les deux extrémités (139B, 139C).

9. Procédé de montage selon la revendication 7, **caractérisé en ce que** lors de l'étape (a), on déplace une extrémité libre (139C) du lien (113) entre une position de repos engagée dans les guides de positionnement et une position active de fixation en appui sur l'une (119) des parties de raccordement, par coopération entre ladite partie de raccordement (119) et le lien (113).

## Claims

1. Electric motor (11) for a vehicle ventilator, of the type comprising:
- a stator (15) comprising at least one component (17) for generating a rotating electromagnetic field;
- a rotor (19) mounted rotatably relative to the stator (15) about a rotor axis (A-A'); and
- a housing (23) for controlling rotation of the rotor (19) mounted integrally on the stator (15), the housing (23) including at least one electronic card (25) for controlling rotation of the rotor (19) and means for electrically connecting the electronic card (25) and the or each generating component (17);
in which the connection means (27) are substantially freely deformable
and in which the connection means (27) comprise a substantially freely deformable strap (113) of electrically conducting material having a region (141; 139C) integral with the electronic card (25) and a region (139B; 139C) integral with the stator (15)
**characterised in that** the strap is formed by a substantially freely deformable braid.

2. Electric motor (11) according to claim 1, **characterised in that** the connection means (27) includes guides (131; 143) for positioning the strap (133) integrally with one of the card (25) or the stator (15), at least one end (139B) of the strap (113) being fixed to one of the positioning guides (131).

3. Electric motor (11) according to claim 2, **characterised in that** two ends (139B; 139C) of the strap (113) are fixed on one of the said positioning guides (131), the strap (113) having an intermediate region (141) substantially freely deformable and extending between the said end (139B; 139C) and on which is fixed the other of the card (25) or the stator (15).

4. Electric motor (11) according to one of claims 2 or 3, **characterised in that** the positioning guides are included in a plug (111) projecting from the electronic card (25), the stator (15) including an electrical connection pin (109) located opposite the plug (111).

5. Electric motor (11) according to claim 4, **characterised in that** the plug has an axial profile (125) presenting a U-shaped transverse part, and fixing tongues (127) for the card (25), electronically plated to the card (25).

6. Method of mounting a motor (11) according to any of claims 1-5, **characterised in that** it comprises the following steps:
(a) positioning a first connecting part (119) integral with the stator (115) adjacent a second connecting part (111) integral with the electronic card (25); and
(b) fixing a substantially freely deformable strap (113) of electrically conducting material formed by a substantially freely deformable braid on one or other of the said connecting parts (111, 119).

7. Method of mounting according to claim 6, **characterised in that** it comprises the following steps:
- before step (a), fixing at least one end (139B) of the strap (113) in the positioning guides integral with one of the stator (15) and the electronic card (25); and
- bringing the connecting part (119) of the other of the stator (15) and the electronic card (25) into contact with the strap (113) at the same time as step (a).

8. Method of mounting according to claim 7, **characterised in that** before step (a), two ends (139B, 139C) of the strap (113) are fixed in the positioning guides, and that at the same time as step (a), the connecting region (119) of the other of the stator (15) and the electronic card (25) is brought into contact with an intermediate region (141) of the strap (113) provided between the two ends (139B, 139C).

9. Method of mounting according to claim 7, **characterised in that** at the same time as step (a), a free end (139C) of the strap (113) is moved between a rest position engaged in the positioning guides and an actively fixed position supported on one of the connection parts (119), by cooperation between the said connection part (119) and the strap (113).

## Patentansprüche

1. Elektromotor (11) für einen Kraftfahrzeuglüfter, des Typs, der aufweist:
- einen Stator (15), der mindestens eine Einrichtung (17) zum Erzeugen eines elektromagnetischen Drehfeldes aufweist,
- einen Rotor (19), der relativ zu dem Stator (15) um eine Rotorachse (A-A') drehbar montiert ist,
- ein Gehäuse (23) zum Steuern der Rotation des Rotors (19), das einstückig mit dem Stator (15) montiert ist, wobei das Gehäuse (23) mindestens eine elektronische Karte (25) zum Steuern der Rotation des Rotors (19) und Mittel (27) zum elektrischen Anschließen der elektronischen Karte (25) und der oder jeder Erzeugungseinrichtung (17) enthält,
wobei die Anschlussmittel (27) im Wesentlichen frei verformbar sind,
und wobei die Anschlussmittel (27) ein im Wesentlichen frei verformbares Verbindungsstück (113) aus elektrisch leitendem Material aufweisen, das einen mit der elektronischen Karte (25) einstückigen Bereich (141, 139C) und einen mit dem Stator (15) einstückigen Bereich (139B, 139C) aufweist,
**dadurch gekennzeichnet, dass** das Verbindungsstück durch eine im Wesentlichen frei verformbare Litze ausgebildet ist.

2. Elektromotor (11) gemäß Anspruch 1, **dadurch gekennzeichnet, dass** die Anschlussmittel (27) Führungen (131, 143) zum Positionieren des Verbindungsstücks (113) aufweisen, die mit einer/einem von der Karte (25) oder dem Stator (15) einstückig sind, wobei mindestens ein Ende (139B) des Verbindungsstücks (113) an einer der Positionierungsführungen (131) befestigt ist.

3. Elektromotor (11) gemäß Anspruch 2, **dadurch gekennzeichnet, dass** zwei Enden (139B, 139C) des Verbindungsstücks (113) an einer der Positionierungsführungen (131) befestigt sind, wobei das Verbindungsstück (113) einen dazwischenliegenden Bereich (141) aufweist, der im Wesentlichen frei verformbar ist und sich zwischen den Enden (139B, 139C) erstreckt, und an dem die/der andere von der Karte (25) oder dem Stator (15) befestigt ist.

4. Elektromotor (11) gemäß einem der Ansprüche 2 bis 3, **dadurch gekennzeichnet, dass** die Positionierungsführungen in einer Klammer (111) enthalten sind, die vorspringend auf der elektronischen Karte (25) montiert ist, wobei der Stator (15) eine Lasche (109) zum elektrischen Anschließen aufweist, die gegenüber der Klammer (111) positioniert ist.

5. Elektromotor (11) gemäß Anspruch 4, **dadurch gekennzeichnet, dass** die Klammer ein Axialprofil (125), das einen Querschnitt in U-Form aufweist, und Befestigungszungen (127) zum Befestigen an der elektronischen Karte (25) aufweist, die gegen die Karte (25) gepresst sind.

6. Verfahren zu Montieren eines Motors (11) gemäß einem der Ansprüche 1 bis 5, **dadurch gekennzeichnet, dass** es die folgenden Schritte aufweist:
(a) Positionieren eines ersten Anschlussteils (119), der einstückig mit dem Stator (115) ist, benachbart zu einem zweiten Anschlussteil (111), der einstückig mit der elektronischen Karte (25) ist, und
(b) Befestigen eines im Wesentlichen frei verformbaren Verbindungsstücks (113) aus elektrisch leitendem Material, das von einer im Wesentlichen frei verformbaren Litze gebildet wird, an dem einen und an dem anderen der Anschlussteile (111, 119).

7. Montierverfahren gemäß Anspruch 6, **dadurch gekennzeichnet, dass** es die folgenden Schritte aufweist:
- vor dem Schritt (a) Befestigen mindestens eines Endes (139B) des Verbindungsstücks (113) in Positionierungsführungen, die mit einem/einer von dem Stator (15) und der elektronischen Karte (25) einstückig sind, und
- während des Schrittes (a) Bringen des Anschlussteils (119) des/der anderen von dem Stator (15) und der elektronischen Karte (25) in Kontakt mit dem Verbindungsstück (113).

8. Montierverfahren gemäß Anspruch 7, **dadurch gekennzeichnet, dass** vor dem Schritt (a) zwei Enden (139B, 139C) des Verbindungsstücks (113) in den Positionierungsführungen befestigt werden, und dass während des Schrittes (a) der Anschlussbereich (119) des/der anderen von dem Stator (15) und der elektronischen Karte (15) in Kontakt mit einem Zwischenbereich (141) des Verbindungstücks (113) gebracht wird, der zwischen den beiden Enden (139B, 139C) positioniert ist.

9. Montierverfahren gemäß Anspruch 7, **dadurch gekennzeichnet, dass** während des Schrittes (a) durch Zusammenwirken des Anschlussteils (119) und des Verbindungsstücks (113) ein freies Ende (139C) des Verbindungsstücks (113) zwischen einer Ruhestellung in Eingriff mit den Positionierungsführungen und einer aktiven Befestigungsposition gestützt auf den einen (119) der Anschlussteile bewegt wird.
